# EUROPÄISCHE PATENTSCHRIFT

(11) **EP 3 553 698 B1**
(45) Veröffentlichungstag und Bekanntmachung des Hinweises auf die Patenterteilung: **27.10.2021**
(21) Anmeldenummer: 19167744.2
(22) Anmeldetag: 08.04.2019
(51) Int. Cl.: G06K 9/00, B65F 3/00, G06K 9/20

(54) **ERFASSUNG DER BESTANDTEILE IN EINER MENGE VON GEGENSTÄNDEN, INSBESONDERE ABFÄLLEN, MÜLL UND/ODER WERTSTOFFEN**
DETECTION OF COMPONENTS IN A SET OF OBJECTS, IN PARTICULAR WASTE, REFUSE AND/OR VALUABLE MATERIALS
DÉTECTION DE COMPOSANTS DANS UN ENSEMBLE D'OBJETS, EN PARTICULIER DE DÉCHETS, D'ORDURES ET/OU DE MATÉRIAUX VALORISABLES

(30) Priorität: 09.04.2018 AT 502892018
(43) Veröffentlichungstag der Anmeldung: 16.10.2019
(73) Patentinhaber: Saubermacher Dienstleistungs AG, 8073 Feldkirchen bei Graz (AT)
(72) Erfinder: Lichtenegger, Georg, 9441 Twimberg (AT); Laske, Stephan, 8010 Graz (AT); Opelt, Andreas, 8047 Graz (AT); König, Manfred, 8713 St. Stefan ob Leoben (AT); Rinnhofer, Alfred, 8061 St. Radegund (AT); Jaschik, Malte, 8020 Graz (AT)
(74) Vertreter: Dilg, Haeusler, Schindelmann Patentanwaltsgesellschaft mbH

(56) Entgegenhaltungen:
- EP-A1- 3 208 753
- WO-A2-2014/179667
- FR-A1- 3 036 107
- Dr Tuomas ET AL: "ZenRobotics Recycler - Robotic Sorting using Machine Learning", , 13. März 2014 (2014-03-13), XP055551303, Gefunden im Internet: URL:https://users.ics.aalto.fi/praiko/pape rs/SBS14.pdf [gefunden am 2019-02-04]
- SATHISH PAULRAJ GUNDUPALLI ET AL: "Multi-material classification of dry recyclables from municipal solid waste based on thermal imaging", WASTE MANAGEMENT., Bd. 70, 23. September 2017 (2017-09-23), Seiten 13-21, XP055613558, US ISSN: 0956-053X, DOI: 10.1016/j.wasman.2017.09.019
- SATHISH PAULRAJ GUNDUPALLI ET AL: "A review on automated sorting of source-separated municipal solid waste for recycling", WASTE MANAGEMENT., Bd. 60, 20. September 2016 (2016-09-20), Seiten 56-74, XP055551300, US ISSN: 0956-053X, DOI: 10.1016/j.wasman.2016.09.015

## Beschreibung

### Gebiet der Erfindung

Die Erfindung betrifft das Gebiet der Erfassung von Bestandteilen in einer Menge von Gegenständen, insbesondere ein System und ein Verfahren zum Erfassen der Bestandteile in einer Menge von Gegenständen, insbesondere Abfällen, Müll und/oder Wertstoffen, die auf eine Fläche, insbesondere in einem Fahrzeug zur Müllabfuhr, verteilt ist. Die Erfindung betrifft des Weiteren ein Fahrzeug zur Müllabfuhr.

### Hintergrund

Müll, Abfall und verschiedene Wertstoffe werden üblicherweise in regelmäßigen Abständen von speziellen Fahrzeugen eingesammelt und zur Weiterverarbeitung, z.B. Verbrennung oder Recycling, in einer dazu eingerichteten Behandlungsanlage transportiert. In der Behandlungsanlage werden die eingesammelten Güter analysiert und sortiert, um eine gesetzeskonforme und nachhaltige Behandlung zu ermöglichen. Um eine Vermischung unterschiedlicher Abfallarten möglichst gering zu halten und den daraus folgenden erhöhten Sortieraufwand bei der Behandlung zu minimieren, findet vor der Einsammlung eine Grobsortierung statt, indem Abfallbesitzer verpflichtet werden, die die unterschiedlichen Abfallfraktionen in spezifische Abfalltonnen zu entsorgen. Daher werden separate Tonnen für verschiedene Kategorien, z.B. Restmüll, Kunststoffe, Dosen, Biomüll und Glas vor Wohnhäusern und Firmengebäuden bereitgestellt. Bei der Abfallentsorgung durch die Abfallbesitzer wird aber nicht geprüft, ob sie diese Trennpflicht erfüllen bzw. ob diese Grobsortierung bei allen Abgabestellen korrekt durchgeführt wird. Mit anderen Worten werden die Inhalte der Tonnen der relevanten Kategorie nicht kontrolliert, sondern einfach in das Fahrzeug geladen und zur Behandlungsanlage transportiert. Diese Vorgehensweise ist mit mehreren Nachteilen verbunden. Erstens kann die fehlende Kontrolle der Tonneninhalte und Abfallzusammensetzung zu gefährlichen Situationen, z.B. Feuern im Fahrzeug führen. Zweitens muss eine gründliche und aufwendige Prüfung immer in der Behandlungsanlage durchgeführt werden.

EP 3 208 753 A1 beschreibt ein Abfallmanagement-System zur Fernprüfung. Das System kann einen optischen Sensor aufweisen, der an Bord des Servicefahrzeugs montiert werden kann und konfiguriert ist, um mit dem Abfall verbundene Bilddaten zu erfassen.

Sathish Paulraj Gundupalli et al: "Multi-material classification of dry recyclables from municipal solid waste based on thermal imaging" offenbart ein Wärmebildsystem zur Klassifizierung von nützlichen Wertstoffen aus einer simulierten Probe von Siedlungsabfällen.

Dr Tuomas et al: "ZenRobotics Recycler - Robotic Sorting using Machine Learning" offenbart ein System, das Bau- und Abbruchabfälle sortiert, indem es wertvolle Objekte mit Roboterhänden von einem Förderband aufnimmt und so eine nützliche Reinheit von Holz, Stein und Metall erreicht, ohne auf menschliche Sortierer zurückgreifen zu müssen. Maschinelles Lernen wird verwendet, um einige der Hauptproblemen zu lösen, wie z.B. das Erkennen von Materialien und das Greifen von unregelmäßigen Objekten aus einem Abfallstrom auf einer Förderband.

Der vorliegenden Erfindung liegt die Aufgabe zugrunde, verbesserte Techniken bereitzustellen, welche die oben beschriebenen und weitere Probleme überwinden können.

### Zusammenfassung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein System beschrieben zum

Erfassen der Bestandteile in einer Menge von Gegenständen, welche Abfälle, Müll und/oder Wertstoffe aufweisen, die auf eine Fläche in einem Pressmüllfahrzeug verteilt ist. Das System aufweisend:
(a) eine erste optische Aufnahmevorrichtung, die zum Aufnehmen eines 2D-Farbbildes der Menge von Gegenständen eingerichtet ist;
(b) eine zweite optische Aufnahmevorrichtung, die zum Aufnehmen einer Mehrzahl von 2D-Spektralbildern der Menge von Gegenständen eingerichtet ist, wobei jedes 2D-Spektralbild einer vorbestimmten jeweiligen Wellenlänge entspricht;
(c) eine dritte optische Aufnahmevorrichtung, die zum Aufnehmen eines 3D-Bildes der Menge von Gegenständen eingerichtet ist;
(d) eine Beleuchtungseinheit, die zum Beleuchten der Menge von Gegenständen eingerichtet ist; und
(e) eine Datenverarbeitungseinheit, die zum Erfassen der Bestandteile in der Menge von Gegenständen basierend auf dem 2D-Farbbild, der Mehrzahl von 2D-Spektralbildern und dem 3D-Bild und unter Verwendung eines neuronalen Netzwerks eingerichtet ist, wobei die Datenverarbeitungseinheit ferner eingerichtet ist anhand des neuronalen Netzwerks die Bestandteile der vorhandenen Menge von Gegenständen in den aufgenommenen Bildern zu erfassen.

Das System ist zudem konfiguriert bei der Müllschütte eines Pressmüllfahrzeugs montiert zu werden, welche Umgebung vollkommen dunkel und sehr starker mechanischer Belastung ausgesetzt ist.

Gemäß einem Ausführungsbeispiel der Erfindung liegt dem beschriebenen System die Erkenntnis zugrunde, dass eine intelligente Auswertung der optischen Eigenschaften der gerade nach dem Ausleeren einer Tonne auf einer Fläche im Fahrzeug vorhandenen Menge von Gegenständen eine effiziente und zuverlässige Erfassung der einzelnen Bestandteile dieser Menge erlaubt. Zum einen kann es somit sofort erkannt werden, wenn gefährliche Gegenstände in das Fahrzeug geladen werden. Zum anderen bestehen bei der Ankunft in der Behandlungsanlage detaillierte Kenntnisse über die eingesammelten Güter, so dass die weitere Sortierung und Verarbeitung gezielt gestaltet und angepasst werden kann.

Gemäß einem Ausführungsbeispiel der Erfindung wird erstmals ein System (zum Erfassen einer Menge von Abfällen und Müll) beschrieben, welches nicht an einem Förderband innerhalb einer Anlage (z.B. einer Müllsortierungsanlage) betrieben wird, sondern in der "unwirtlichen" Umgebung eines Müllfahrzeugs montiert ist. Insbesondere ist das beschriebene System (zumindest teilweise) bei der Schütte eines Pressmüllfahrzeugs montiert. Diese Umgebung ist vollkommen dunkel und sehr starker mechanischer Belastung (insbesondere Rütteln und Schütteln) ausgesetzt, durch das fahrende Müllauto, durch die Pressvorgänge und auch durch herumfliegenden Müll. Aus diesem Grund sind die Herausforderungen an Beleuchtung, Elektronik und Verschmutzung bei dem vorliegenden System enorm hoch. Im Vergleich zu der vergleichsweise beschaulichen Messumgebung innerhalb einer Förderanlage erfordert die Messumgebung einer rüttelnden, dunklen, und schmutzigen Umgebung einer Müllschütte vollkommen andere technische Lösungen.

Zudem werden in bekannten Förderanlagen meist homogene Gemische (z.B. nur Kunststoffe) untersucht. In einem Müllfahrzeug, welches sich z.B. im städtischen Betrieb befindet, sammeln sich jedoch Abfälle unterschiedlichster Arten. Neben der Beständigkeit gegen die extremen Bedingungen innerhalb eines fahrenden Müllfahrzeugs muss das beschriebene System zusätzlich in der Lage sein jegliche Abfallmischung, insbesondere Restmüll und/oder Biomüll aufweisend, erfassen und auch klassifizieren zu können. Gerade eine Restmüll-Mischung ist sehr viel komplexer in der Klassifizierung als z.B. eine reine Kunststoff-Fraktion.

Gemäß einem weiteren Ausführungsbeispiel der Erfindung hat sich überraschenderweise gezeigt, dass es gerade die Kombination der drei voneinander verschiedenen optischen Messtechniken, nämlich i) 2D-Farbbild, ii) 2D-Spektralbild, und iii) 3D-Bild (also z.B. Stereo oder TOF) ist, welche es ermöglicht unter den oben beschriebenen mechanischen Extrembedingungen auf effiziente und zuverlässige Weise eine Klassifizierung einer vollkommen inhomogenen Abfallmischung zu erhalten. Hierbei kann gerade die Tiefeninformation des 3D (Stereo) Kamerasystems, z.B. für die Abgrenzung der Schütte im Fahrzeug vom tatsächlich zu klassifizierenden Abfall, sehr vorteilhaft sein.

Die Auswertung mittels des neuronalen Netzwerkes ermöglicht es schließlich eine Datenverarbeitungseinheit auf diese hochkomplexe

Klassifizierungstätigkeit "zu trainieren". Der Lernalgorithmus kann Standard neuronale Netze nutzen und damit einen vielseitigen Einsatz des Klassifikationssystems ermöglichen.

In diesem Dokument bezeichnet "2D-Farbbild" insbesondere ein gewöhnliches digitales Foto, insbesondere mit einer Auflösung von 5MP oder mehr.

In diesem Dokument bezeichnet "2D-Spektralbild" insbesondere ein Bild, das bei einer bestimmten Wellenlänge aufgenommen wurde, wobei die Wellenlänge im Bereich von sichtbarem Licht bis zum Nahinfrarotlicht liegen mag.

In diesem Dokument bezeichnet "3D-Bild" insbesondere ein dreidimensionales Bild, das z.B. mit einer (aktiven oder passiven) Stereokamera oder mit einer Laufzeitkamera (TOF-Kamera) aufgenommen wurde.

Erfindungsgemäß kann das beschriebene System insbesondere so verwendet werden, dass nach einem Ausladen der Inhalte einer Mülltonne in ein Müllabfuhrfahrzeug die erste, zweite und dritte optische Aufnahmevorrichtung betrieben werden und die dadurch entstandenen Bilddaten mittels der Datenverarbeitungseinheit unter Verwendung eines neuronalen Netzwerks ausgewertet werden, um die einzelnen Bestandteile zu erfassen. Erst danach werden die Güter komprimiert. Somit kann es bei jedem einzelnen Beladungsvorgang mit großer Genauigkeit erfasst werden, welche Bestandteile in der eingefüllten Menge von Gegenständen vorhanden sind.

Gemäß einem Ausführungsbeispiel der Erfindung weist das Erfassen der Bestandteile in der Menge von Gegenständen ein Erfassen eines Gegenstandstyps für jeden Gegenstand auf.

Es wird folglich für jeden einzelnen Gegenstand ein entsprechender Gegenstandstyp, zum Beispiel "Zeitung", "Aluminiumdose", "Batterie", "Plastikdose" usw. bestimmt. Das Ergebnis der Erfassung umfasst somit eine Liste von den Gegenstandstypen, die in der Menge von Gegenständen enthalten sind.

Gemäß einem weiteren Ausführungsbeispiel der Erfindung weist das Erfassen der Bestandteile in der Menge von Gegenständen ein Erfassen einer Gegenstandsmenge für jeden Gegenstand auf.

Es wird folglich für jeden einzelnen Gegenstand eine entsprechende Gegenstandmenge, zum Beispiel ein Volumen oder eine Masse bestimmt. Das Ergebnis der Erfassung umfasst somit eine Angabe der Menge von jedem Bestandteil.

Die Beleuchtungseinheit ist insbesondere dazu eingerichtet, die zu erfassende Menge von Gegenständen kräftig und gleichmäßig zu beleuchten, um eine gute und reproduzierbare Beleuchtung für die optischen Aufnahmevorrichtungen bereitzustellen. Die Beleuchtungseinheit ist des Weiteren dazu eingerichtet, Licht mit einer spektralen Zusammensetzung auszustrahlen, die jede der vorbestimmten Wellenlängen der zweiten optischen Aufnahmevorrichtung beinhaltet.

Gemäß einem weiteren Ausführungsbeispiel der Erfindung weist das System ferner eine Positionsbestimmungseinheit auf, die zum Bestimmen einer geografischen Position der Menge von Gegenständen und zum Speichern dieser geografischen Position zusammen mit dem 2D-Farbbild, der Mehrzahl von 2D-Spektralbildern und dem 3D-Bild eingerichtet ist.

Die Positionsbestimmungseinheit mag insbesondere eine GPS-Einheit oder ähnliches aufweisen. Durch Kenntnis der geografischen Position kann es zum Beispiel festgestellt werden, bei welchen Wohnhäusern der Müll falsch vorsortiert wird oder gefährliche Gegenstände abgegeben werden, die anders entsorgt werden müssen.

Gemäß einem weiteren Ausführungsbeispiel der Erfindung ist die Positionsbestimmungseinheit ferner zum Bestimmen eines Datums und einer Uhrzeit eingerichtet.

Gemäß einem weiteren Ausführungsbeispiel der Erfindung sind die erste optische Aufnahmevorrichtung, die zweite optische Aufnahmevorrichtung und die dritte optische Aufnahmevorrichtung relativ zu einem vorbestimmten Referenzpunkt fest angeordnet.

Dies ermöglicht insbesondere eine Überlagerung der jeweiligen Bilder und somit eine detaillierte Auswertung derselben.

Gemäß einem weiteren Ausführungsbeispiel der Erfindung weist das System ferner eine Wärmekamera auf, die zum Bestimmen einer Temperaturverteilung in der Menge von Gegenständen eingerichtet ist.

Die Temperaturverteilung mag auch zum Erfassen der Bestandteile herangezogen werden.

Gemäß einem weiteren Ausführungsbeispiel der Erfindung weist das System ferner eine Alarmeinheit auf, die zum Abgeben eines Alarmsignals eingerichtet ist, wenn die Menge von Gegenständen eine Temperatur aufweist, welche einen vorbestimmten Temperaturschwellenwert überschreitet.

Mit anderen Worten wird ein Alarmsignal abgegeben, wenn ein oder mehrere Gegenstände eine ausreichend hohe Temperatur haben. Somit können gefährliche Situationen, die zu brennenden Fahrzeugen führen können, vermieden werden.

Gemäß einem weiteren Ausführungsbeispiel der Erfindung weist die dritte optische Aufnahmevorrichtung die erste optische Aufnahmevorrichtung, eine weitere optische Aufnahmevorrichtung und eine 3D-Datenverarbeitungseinheit auf, wobei die weitere optische Aufnahmevorrichtung identisch mit der ersten optischen Aufnahmevorrichtung und in einer relativ zu dieser vorbestimmten Position angebracht ist, wobei die 3D-Datenverarbeitungseinheit zum Erzeugen von 3D-Bilddaten basierend auf 2D-Bildern, die von der ersten optischen Aufnahmevorrichtung und der weiteren optischen Aufnahmevorrichtung aufgenommen wurden, eingerichtet ist.

In diesem Ausführungsbeispiel besteht die dritte optische Aufnahmevorrichtung aus zwei identischen oder weitgehend ähnlichen 2D-Kameras, wobei die eine gleichzeitig die erste optische Aufnahmevorrichtung ist. Die beiden Kameras sind relativ zueinander fest angebracht und erlauben somit ein Erzeugen von 3D-Bilddaten durch die 3D-Datenverarbietungseinheit.

Gemäß einem weiteren Ausführungsbeispiel der Erfindung ist die Datenverarbeitungseinheit in einer Zentrale angebracht, das System ferner aufweisend eine Datenkommunikationseinheit, die zum Übertragen von Daten, insbesondere dem 2D-Farbbild, der Mehrzahl von 2D-Spektralbildern und dem 3D-Bild von der ersten, zweiten und dritten Aufnahmevorrichtung an die Datenverarbeitungseinheit eingerichtet ist.

In diesem Ausführungsbeispiel befindet die Datenverarbeitungseinheit sich in einer Zentrale und erhält die Bilddaten (und gegebenenfalls weitere Daten, wie z.B. GPS-Daten) mittels Datenübertragung durch die Datenkommunikationseinheit, z.B. mittels Mobilfunkübertragung, WLAN oder ähnliches.

Gemäß einem zweiten Aspekt der Erfindung wird ein Fahrzeug zur Müllabfuhr beschrieben, das ein System gemäß dem ersten Aspekt oder einem der obigen Ausführungsformen aufweist.

Gemäß einem dritten Aspekt der Erfindung wird ein Verfahren beschrieben zum Erfassen der Bestandteile in einer Menge von Gegenständen, welche Abfälle, Müll und/oder Wertstoffe aufweisen, die auf eine Fläche in einem Pressmüllfahrzeug, verteilt ist, das Verfahren aufweisend:
(a) Beleuchten der Menge von Gegenständen;
(b) Aufnehmen eines 2D-Farbbildes der Menge von Gegenständen;
(c) Aufnehmen einer Mehrzahl von 2D-Spektralbildern der Menge von Gegenständen, wobei jedes 2D-Spektralbild einer vorbestimmten jeweiligen Wellenlänge entspricht;
(d) Aufnehmen eines 3D-Bildes der Menge von Gegenständen; und
(e) Erfassen der Bestandteile in der Menge von Gegenständen basierend auf dem 2D-Farbbild, der Mehrzahl von 2D-Spektralbildern und dem 3D-Bild und unter Verwendung eines neuronalen Netzwerks, wobei die Bestandteile der vorhandenen Menge von Gegenständen in den aufgenommenen Bildern anhand des neuronalen Netzwerks erfasst werden.

Gemäß einem weiteren Ausführungsbeispiel ist zumindest eine der ersten optischen Aufnahmevorrichtung, der zweiten optischen Aufnahmevorrichtung, und der dritten optischen Aufnahmevorrichtung eingerichtet, um Bildserien aufzunehmen. Ferner kann das System eingerichtet sein (insbesondere mittels der Beleuchtungseinheit) eine dynamische Beleuchtung bereitzustellen.

Um die Information unter den unwidrigen und variierenden Beleuchtungsbedingungen stabiler und robuster bereitstellen zu können, hat es sich in einem Ausführungsbeispiel als vorteilhaft herausgestellt, Bildserien aufzunehmen und über die Dynamik von Belichtungszeiten zu optimieren.

Gemäß einem weiteren Ausführungsbeispiel ist das System (zumindest teilweise) mit der Spannungsversorgung des Müllfahrzeugs über eine Spitzenglättung und/oder eine Unterspannungsversorgung gekoppelt.

Eine weitere Herausforderung ist der stabile Einbau des beschriebenen Systems im Müllfahrzeug. In einem Ausführungsbeispiel hat es sich als vorteilhaft herausgestellt, die Hardware des Systems mit der Spannungsversorgung des Müllfahrzeugs über eine Spitzenglättung und/oder Unterspannungsversorgung zu kombinieren. Zusätzlich kann eine Kombination von langsam anlaufender Beleuchtung (damit nicht zu viel Strom gezogen wird) und einer optimierten Kopplung mit der Steuerung eines Standard-Müllfahrzeugs durchaus vorteilhaft sein.

Gemäß einem weiteren Ausführungsbeispiel weist das System auf: eine Projektionsvorrichtung zum Bereitstellen einer Lichtprojektion, insbesondere einer Laserprojektion, und eine Kalibriervorrichtung zum Durchführen einer Achsenkalibrierung mittels der Lichtprojektion. Hierdurch kann die Genauigkeit der Aufnahmevorrichtungen verbessert werden.

Gemäß einem weiteren Ausführungsbeispiel sind die zweite Aufnahmevorrichtung (insbesondere ein Infrarot bzw. NIR Sensor) und die dritte Aufnahmevorrichtung (insbesondere eine RGB-Stereo-Kamera), insbesondere über eine Sensorfusion, gekoppelt.

Gemäß einem weiteren Ausführungsbeispiel weist die Sensorfusion eine Kopplung der zweiten Aufnahmevorrichtung und der dritten Aufnahmevorrichtung über die (insbesondere automatische) Achsenkalibrierung mittels der Licht (insbesondere Laser, weiter insbesondere Laser-Punkt) Projektion auf.

In einem exemplarischen Ausführungsbeispiel kann eine Sensoreinheit eine Sensorfusion von RGB-Stereo Kamera(s) und einem NIR (near infrared) Sensor über eine automatische Achsenkalibrierung über eine Laser-Punkt Projektion umfassen. Durch diese Laser-Punkt Projektion können auch die Daten von homogenen Flächen für einen Lernalgorithmus vorteilhaft verwendet werden.

Gemäß einem weiteren Ausführungsbeispiel weist die Menge an Gegenständen eine inhomogene Mischung aus Abfällen und Müll, insbesondere Restmüll und/oder Biomüll beinhaltend, auf.

Gemäß einem weiteren Ausführungsbeispiel weist das System ferner auf: eine Komprimier-Einheit, welche eingerichtet ist zum Komprimieren der erfassten Daten und zum Bereitstellen der komprimierten Daten an die Datenkommunikationseinheit.

Gemäß einem exemplarischen Ausführungsbeispiel erfolgt eine Komprimierung der Daten auf einem im System enthaltenen Industrie-PC, damit die Übermittlung aus dem Fahrzeug über WLAN (falls vorhanden am jeweiligen Standort) oder LTE erfolgen kann.

### Kurze Beschreibung der Zeichnungen

Figur 1 zeigt ein System gemäß einer Ausführungsform der vorliegenden Erfindung.
Figur 2 zeigt ein Verfahren gemäß einer Ausführungsform der vorliegenden Erfindung.

### Detaillierte Beschreibung

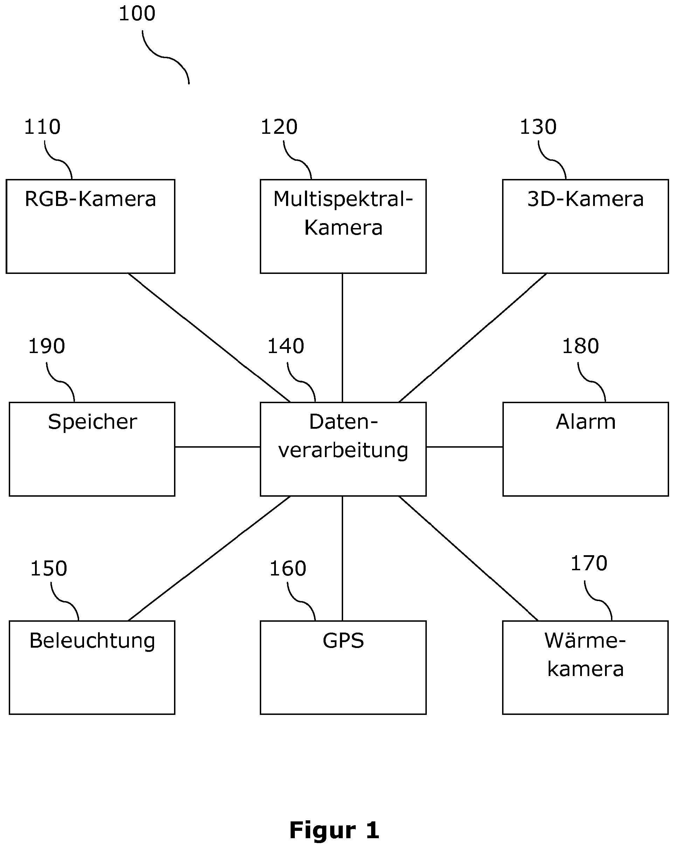

Die Figur 1 zeigt ein erfindungsgemäßes System 100 zum Erfassen der Bestandteile in einer Menge von Gegenständen, insbesondere Abfällen, Müll und/oder Wertstoffen, die auf eine Fläche, insbesondere in einem Fahrzeug zur Müllabfuhr, verteilt ist.

Das System 100 weist eine RGB-Kamera (erste optische Aufnahmevorrichtung) 110, eine Multispektralkamera (zweite optische Aufnahmevorrichtung) 120, eine 3D-Kamera (dritte optische Aufnahmevorrichtung) 130 und eine Datenverarbeitungseinheit 140 auf. Diese drei optische Aufnahmevorrichtungen 110, 120, 130 und die Datenverarbeitungseinheit 140 sind erforderlich für die Funktion des Systems 100. Das in Figur 1 gezeigte System 100 weist des Weiteren als optionale Merkmale eine Beleuchtungseinheit 150, eine GPS-Einheit (geografische Positionsbestimmungseinheit) 160, eine Wärmekamera 170, eine Alarmeinheit 180 und einen Datenspeicher 190 auf.

Die RGB-Kamera 110 ist vorzugsweise eine gewöhnliche Digitalkamera mit einer Bildauflösung von 5 MP oder mehr und einer festen Brennweite, die zum Ablichten des relevanten Bereichs in dem Laderaum eines Müllabfuhrfahrzeugs geeignet ist. Die Multispektralkamera 120 ist dazu eingerichtet eine Reihe von Bildern bei verschiedenen Wellenlängen zwischen sichtbarem Licht und Nahinfrarotlicht aufzunehmen. Die 3D-Kamera 130 ist vorzugsweise eine Stereokamera oder eine Laufzeitkamera. Im ersten Falle besteht die Stereokamera vorzugsweise aus der RGB-Kamera 110 und eine weitere, mit dieser identische RGB-Kamera, die relativ zu der RGB-Kamera 110 fest positioniert ist, um eine 3D-Rekonstruktion zu ermöglichen. Die drei optischen Aufnahmevorrichtungen 110, 120, 130 sind im Fahrzeug fest installiert und relativ zu einem gemeinsamen Referenzpunkt ausgerichtet, damit alle Bilder unmittelbar überlagert werden können.

Die Datenverarbeitungseinheit 140 weist einen geeigneten Computer auf, der mit Software zum Auswerten der aufgenommenen Bilder unter Verwendung eines neuronalen Netzwerks eingerichtet ist. Das neuronale Netzwerk ist dazu trainiert, eine Reihe von verschiedenen Gegenstandstypen in den aufgenommenen Bildern zu erkennen und somit zum Erfassen der Bestandteile der vorhandenen Menge von Gegenständen. Zusätzlich zum Erfassen der Gegenstandstypen kann die Datenverarbeitungseinheit 140 auch dazu eingerichtet sein, die vorhandene Menge (oder Größe) von jedem Gegenstand zu erfassen. Das Ergebnis, d.h. eine Liste von erkannten Gegenstandstypen und gegebenenfalls Gegenstandsmengen wird im Speicher in der Datenverarbeitungseinheit 140 und/oder in einem externen Speicher 190 gespeichert. Der externe Speicher mag separat im Fahrzeug oder in einer Zentrale angebracht sein. Im letzteren Falle werden die Daten über eine gesicherte mobile Datenverbindung übertragen. Die Datenverarbeitungseinheit 140 kann ebenso in der Zentrale angebracht sein, wo dann die Auswertung der erfassten Daten ausgeführt wird. Im letzteren Falle werden die Bilddaten vorzugsweise mittels mobiler Datenkommunikation an die Zentrale übertragen.

Die Beleuchtungseinheit 150 ist fest im Fahrzeug angebracht und so ausgerichtet, dass die Fläche mit den zu erfassenden Gegenständen gut und gleichmäßig belichtet wird. Die spektrale Zusammensetzung des abgegebenen Lichts ist insbesondere an die entsprechenden Erfordernisse der Multispektralkamera 120 angepasst.

Die GPS-Einheit 160 bestimmt bei jedem Vorgang die entsprechende geografische Position des Fahrzeugs sowie Datum und Uhrzeit. Diese Daten werden zusammen mit den Bildern von den drei optischen Aufnahmevorrichtungen 110, 120, 130 und dem Analyseergebnis der Datenverarbeitungseinheit 140 gespeichert, so dass die erfassten Bestandteile einer geografischen Position und gegebenenfalls Datum und Uhrzeit zugeordnet werden können.

Die Wärmekamera 170 ist auch fest im Fahrzeug installiert und ist dazu eingerichtet, eine Wärmeverteilung in der zu analysierenden Menge von Gegenständen zu bestimmen, zum Beispiel als ein Farbbild, in welchem jeder Farbton einer bestimmten Temperatur entspricht. Die bestimmte Temperaturverteilung mag in der von der Datenverarbeitungseinheit 140 durchgeführten Analyse mit einfließen. Falls eine Temperatur über einen vorbestimmten Schwellwert erkannt wird, kann die Alarmeinheit 180 ausgelöst werden, um den Fahrer des Fahrzeugs auf eine gefährliche Situation hinzuweisen, damit dieser sofort entsprechende Sicherheitsmaßnahmen einsetzen kann.

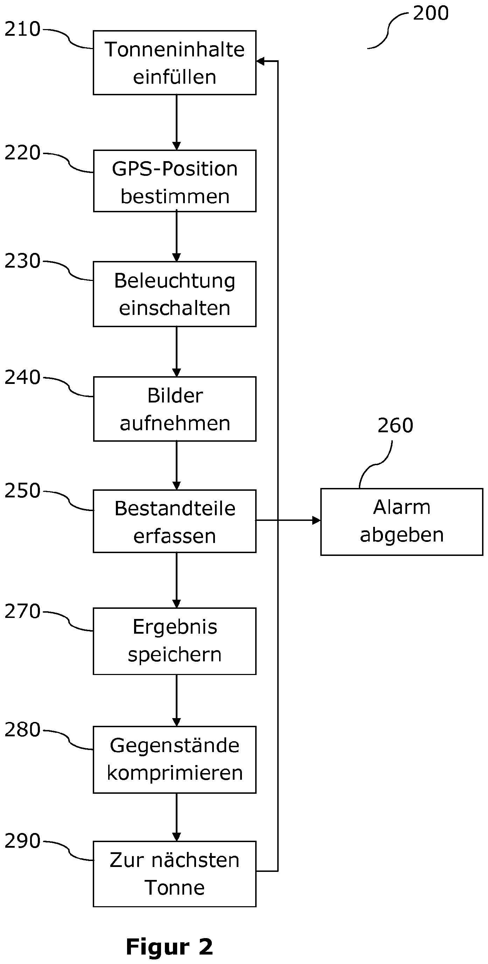

Figur 2 zeigt ein Verfahren 200 gemäß einer Ausführungsform der vorliegenden Erfindung. Das Verfahren 200 beginnt bei 210, indem die Inhalte einer Mülltonne in das Abfuhrfahrzeug eingefüllt werden und die geografische Position des Fahrzeugs bei 220 bestimmt wird. Die auf der dazu vorgesehenen Fläche im Fahrzeug verteilte Menge von Gegenständen wird nun bei 230 durch Einschaltung der Beleuchtungseinheit 150 beleuchtet. Dann werden bei 240 Bilder von jeder der optischen Aufnahmevorrichtungen 110, 120, 130 und gegebenenfalls von der Wärmekamera 170 aufgenommen. Das von der ersten optischen Aufnahmevorrichtung 110 aufgenommene RGB-Foto, die von der zweiten optischen Aufnahmevorrichtung 120 aufgenommenen Spektralbilder und das von der dritten optischen Aufnahmevorrichtung 130 aufgenommene 3D-Bild werden dann bei 250 von der Datenverarbeitungseinheit 140 unter Verwendung eines neuronalen Netzwerks analysiert, um so die Bestandteile in der abgelichteten Menge von Gegenständen zu erfassen. Wird ein gefährlicher Gegenstand, wie zum Beispiel ein chemisches Produkt oder ein brennender Gegenstand erkannt, wird bei 260 ein Alarm abgegeben, um den Fahrer des Fahrzeugs zu alarmieren. Bei 270 wird das Ergebnis des Erfassungsvorgangs, gegebenenfalls zusammen mit Position, Datum und Uhrzeit, gespeichert. Dann wird die Beleuchtungseinheit 150 ausgeschaltet und die Menge von Gegenständen wird bei 280 im Fahrzeug komprimiert. Die Abholung wird bei 290 fortgesetzt, indem das Fahrzeug zur nächsten Tonne fährt und die Schritte 210 bis 280 wiederholt werden.

Mit dem Verfahren 200 werden folglich die Bestandteile jeder geleerten Tonne erfasst und gespeichert, so dass detaillierte Informationen über die gesamten eingesammelten Gegenstände beim Ankunft in der Verarbeitungsanlage vorliegen und genutzt werden können, um die Verarbeitung optimal und sicher zu gestalten.

## Patentansprüche

1. System (100) zum Erfassen der Bestandteile in einer Menge von Gegenständen, welche Abfälle, Müll und/oder Wertstoffe aufweisen, die auf eine Fläche in einem Pressmüllfahrzeug verteilt ist, das System aufweisend:
eine erste optische Aufnahmevorrichtung (110), die zum Aufnehmen eines 2D-Farbbildes der Menge von Gegenständen eingerichtet ist;
eine zweite optische Aufnahmevorrichtung (120), die zum Aufnehmen einer Mehrzahl von 2D-Spektralbildern der Menge von Gegenständen eingerichtet ist, wobei jedes 2D-Spektralbild einer vorbestimmten jeweiligen Wellenlänge entspricht;
eine dritte optische Aufnahmevorrichtung (130), die zum Aufnehmen eines 3D-Bildes der Menge von Gegenständen eingerichtet ist;
eine Beleuchtungseinheit (150), die zum Beleuchten der Menge von Gegenständen eingerichtet ist; und
eine Datenverarbeitungseinheit (140), die zum Erfassen der Bestandteile in der Menge von Gegenständen basierend auf dem 2D-Farbbild, der Mehrzahl von 2D-Spektralbildern und dem 3D-Bild und unter Verwendung eines neuronalen Netzwerks eingerichtet ist, wobei die Datenverarbeitungseinheit (140) ferner eingerichtet ist anhand des neuronalen Netzwerks die Bestandteile der vorhandenen Menge von Gegenständen in den aufgenommenen Bildern zu erfassen;
wobei das System konfiguriert ist bei der Müllschütte eines Pressmüllfahrzeugs montiert zu werden, welche Umgebung vollkommen dunkel und sehr starker mechanischer Belastung ausgesetzt ist.

2. Das System gemäß dem vorhergehenden Anspruch, wobei das Erfassen der Bestandteile in der Menge von Gegenständen ein Erfassen eines Gegenstandstyps für jeden Gegenstand aufweist.

3. Das System gemäß einem der vorhergehenden Ansprüche, wobei das Erfassen der Bestandteile in der Menge von Gegenständen ein Erfassen einer Gegenstandsmenge für jeden Gegenstand aufweist.

4. Das System gemäß einem der vorhergehenden Ansprüche, ferner aufweisend eine Positionsbestimmungseinheit (160), die zum Bestimmen einer geografischen Position der Menge von Gegenständen und zum Speichern dieser geografischen Position zusammen mit dem 2D-Farbbild, der Mehrzahl von 2D-Spektralbildern und dem 3D-Bild eingerichtet ist.

5. Das System gemäß dem vorhergehenden Anspruch, wobei die Positionsbestimmungseinheit ferner zum Bestimmen eines Datums und einer Uhrzeit eingerichtet ist.

6. Das System gemäß einem der vorhergehenden Ansprüche, wobei die erste optische Aufnahmevorrichtung, die zweite optische Aufnahmevorrichtung und die dritte optische Aufnahmevorrichtung relativ zu einem vorbestimmten Referenzpunkt fest angeordnet sind.

7. Das System gemäß einem der vorhergehenden Ansprüche, ferner aufweisend eine Wärmekamera (170), die zum Bestimmen einer Temperaturverteilung in der Menge von Gegenständen eingerichtet ist.

8. Das System gemäß dem vorhergehenden Anspruch, ferner aufweisend eine Alarmeinheit (180), die zum Abgeben eines Alarmsignals eingerichtet ist, wenn die Menge von Gegenständen eine Temperatur aufweist, welche einen vorbestimmten Temperaturschwellenwert überschreitet.

9. Das System gemäß einem der vorhergehenden Ansprüche, wobei die dritte optische Aufnahmevorrichtung die erste optische Aufnahmevorrichtung, eine weitere optische Aufnahmevorrichtung und eine 3D-Datenverarbeitungseinheit aufweist, wobei die weitere optische Aufnahmevorrichtung identisch mit der ersten optischen Aufnahmevorrichtung und in einer relativ zu dieser vorbestimmten Position angebracht ist, wobei die 3D-Datenverarbeitungseinheit zum Erzeugen von 3D-Bilddaten basierend auf 2D-Bildern, die von der ersten optischen Aufnahmevorrichtung und der weiteren optischen Aufnahmevorrichtung aufgenommen wurden, eingerichtet ist.

10. Das System gemäß einem der vorhergehenden Ansprüche, wobei die Datenverarbeitungseinheit in einer Zentrale angebracht ist, das System ferner aufweisend eine Datenkommunikationseinheit, die zum Übertragen von Daten, insbesondere dem 2D-Farbbild, der Mehrzahl von 2D-Spektralbildern und dem 3D-Bild von der ersten, zweiten und dritten Aufnahmevorrichtung an die Datenverarbeitungseinheit eingerichtet ist.

11. Das System gemäß einem der vorhergehenden Ansprüche, ferner aufweisend:
eine Projektionsvorrichtung zum Bereitstellen einer Lichtprojektion, insbesondere einer Laserprojektion, und
eine Kalibriervorrichtung zum Durchführen einer Achsenkalibrierung mittels der Lichtprojektion.

12. Fahrzeug zur Müllabfuhr, das Fahrzeug aufweisend ein System gemäß einem der vorhergehenden Ansprüche,
wobei das Fahrzeug ein Pressmüllfahrzeug mit einer Schütte ist, und
wobei das System bei der Schütte montiert ist.

13. Das Fahrzeug gemäß Anspruch 12,
wobei das System zumindest teilweise mit der Spannungsversorgung des Müllfahrzeugs über eine Spitzenglättung und/oder eine Unterspannungsversorgung gekoppelt ist.

14. Verfahren zum Erfassen der Bestandteile in einer Menge von Gegenständen, welche Abfälle, Müll und/oder Wertstoffe aufweisen, die auf eine Fläche in einem Pressmüllfahrzeug verteilt ist, das Verfahren aufweisend:
Beleuchten der Menge von Gegenständen;
Aufnehmen eines 2D-Farbbildes der Menge von Gegenständen;
Aufnehmen einer Mehrzahl von 2D-Spektralbildern der Menge von Gegenständen, wobei jedes 2D-Spektralbild einer vorbestimmten jeweiligen Wellenlänge entspricht;
Aufnehmen eines 3D-Bildes der Menge von Gegenständen; und
Erfassen der Bestandteile in der Menge von Gegenständen basierend auf dem 2D-Farbbild, der Mehrzahl von 2D-Spektralbildern und dem 3D-Bild und unter Verwendung eines neuronalen Netzwerks, wobei die Bestandteile der vorhandenen Menge von Gegenständen in den aufgenommenen Bildern anhand des neuronalen Netzwerks erfasst werden.

## Claims

1. System (100) for capturing the constituents in an amount of objects which comprise wastes, garbage, and/or valuable materials, which is distributed on a surface of a press garbage collection vehicle, the system comprising:
a first optical recording device (110) which is configured for recording a 2-D color image of the amount of objects;
a second optical recording device (120) which is configured for recording a plurality of 2-D spectral images of the amount of objects, wherein each 2-D spectral image corresponds to a predetermined respective wavelength;
a third optical recording device (130) which is configured for recording a 3-D image of the amount of objects;
an illumination unit (150) which is configured for illuminating the amount of objects; and
a data processing unit (140) which is configured for capturing the constituents in the amount of objects based on the 2-D color image, the plurality of 2-D spectral images, and the 3-D image, and using a neuronal network, wherein the data processing unit (140) is further configured to capture the constituents of the present amount of objects in the recorded images by means of the neuronal network;
wherein the system is configured to be mounted at the garbage chute of a press garbage collection vehicle, which environment is completely dark and is subjected to a very high mechanical stress.

2. The system according to the previous claim, wherein capturing the constituents in the amount of objects comprises capturing a type of object for each object.

3. The system according to one of the previous claims, wherein capturing the constituents in the amount of objects comprises capturing an amount of objects for each object.

4. The system according to one of the previous claims, further comprising a position determination unit (160) which is configured for determining a geographic position of the amount of objects, and for saving this geographic position together with the 2-D color image, the plurality of 2-D spectral images, and the 3-D image.

5. The system according to the previous claim, wherein the position determination unit is further configured for determining a date and a time.

6. The system according to one of the previous claims, wherein the first optical recording device, the second optical recording device, and the third optical recording device are fixedly arranged relatively to a predetermined reference point.

7. The system according to one of the previous claims, further comprising a thermal camera (170) which is configured for determining a temperature distribution in the amount of objects.

8. The system according to the previous claims, further comprising an alarm unit (180) which is configured for outputting an alarm signal, when the amount of objects comprises a temperature which exceeds a predetermined temperature threshold value.

9. The system according to one of the previous claims, wherein the third optical recording device comprises the first optical recording device, a further optical recording device, and a 3-D data processing unit, wherein the further optical recording device is identical with the first optical recording device and is arranged at a position which is predetermined relatively to the first optical recording device, wherein the 3-D data processing unit is configured for generating 3-D image data based on 2-D images which are recorded by the first optical recording device and the further optical recording device.

10. The system according to one of the previous claims, wherein the data processing unit is placed in a headquarter, the system further comprising a data communication unit which is configured for transmitting data, in particular the 2-D color image, the plurality of 2-D spectral images, and the 3-D image, from the first, the second, and the third recording device to the data processing unit.

11. The system according to one of the previous claims, further comprising:
a projection device for providing a light projection, in particular a laser projection, and
a calibrating device for performing an axis calibration by the light projection.

12. Vehicle for garbage collection, the vehicle comprising a system according to one of the previous claims,
wherein the vehicle is a press garbage collection vehicle with a chute, and wherein the system is mounted at the chute.

13. The vehicle according to claim 12,
wherein the system is at least partially coupled with the voltage supply of the garbage collection vehicle via a peak smoothing and/or an under-voltage supply.

14. Method for capturing the constituents in an amount of objects which comprise wastes, garbage, and/or valuable materials, which is distributed on a surface of a press garbage collection vehicle, the method comprising:
illuminating the amount of objects;
recording a 2-D color image of the amount of objects;
recording a plurality of 2-D spectral images of the amount of objects, wherein each 2-D spectral image corresponds to a predetermined respective wavelength;
recording a 3-D image of the amount of objects; and
capturing the constituents in the amount of objects based on the 2-D color image, the plurality of 2-D spectral images, and the 3-D image, and using a neuronal network, wherein the constituents of the present amount of objects in the recorded images are captured by means of the neuronal network.

## Revendications

1. Système (100) pour détecter les composants dans une quantité d'objets, constituée de déchets, d'ordures et/ou de matériaux recyclables, qui est répartie sur une surface dans un véhicule à ordures compressées, le système présentant :
un premier dispositif d'enregistrement optique (110), qui est conçu pour enregistrer une image en couleur 2D de la quantité d'objets ;
un deuxième dispositif d'enregistrement optique (120), qui est conçu pour enregistrer une multitude d'images spectrales 2D de la quantité d'objets, dans lequel chaque image spectrale 2D correspond à une longueur d'onde respective prédéfinie ;
un troisième dispositif d'enregistrement optique (130), qui est conçu pour enregistrer une image 3D de la quantité d'objets ;
une unité d'éclairage (150), qui est conçue pour éclairer la quantité d'objets ; et
une unité de traitement de données (140), qui est conçue pour détecter les composants dans la quantité d'objets sur la base de l'image en couleur 2D de la multitude d'images spectrales 2D et de l'image 3D et en utilisant un réseau neuronal, dans lequel
l'unité de traitement de données (140) est conçue en outre pour détecter à l'aide du réseau neuronal les composants de la quantité présente d'objets sur les images enregistrées ;
dans lequel le système est configuré pour être monté à proximité du déversement d'ordures d'un véhicule à ordures compressées, lequel environnement est totalement sombre et est exposé à une contrainte mécanique très forte.

2. Système selon la revendication précédente, dans lequel la détection des composants dans la quantité d'objets présente une détection d'un type d'objet pour chaque objet.

3. Système selon l'une quelconque des revendications précédentes, dans lequel la détection des composants dans la quantité d'objets présente une détection d'une quantité d'objets pour chaque objet.

4. Système selon l'une quelconque des revendications précédentes, présentant en outre une unité de détermination de position (160), qui est conçue pour déterminer une position géographique de la quantité d'objets et pour mémoriser ladite position géographique conjointement avec l'image en couleur 2D, la multitude d'images spectrales 2D et l'image 3D.

5. Système selon la revendication précédente, dans lequel l'unité de détermination de position est conçue en outre pour déterminer une date et une heure.

6. Système selon l'une quelconque des revendications précédentes, dans lequel le premier dispositif d'enregistrement optique, le deuxième dispositif d'enregistrement optique et le troisième dispositif d'enregistrement optique sont disposés de manière solidaire par rapport à un point de référence prédéterminé.

7. Système selon l'une quelconque des revendications précédentes, présentant en outre une caméra thermique (170), qui est conçue pour déterminer une répartition de température dans la quantité d'objets.

8. Système selon la revendication précédente, présentant en outre une unité d'alarme (180), qui est conçue pour émettre un signal d'alarme quand la quantité d'objets présente une température, laquelle dépasse une valeur de seuil de température prédéterminée.

9. Système selon l'une quelconque des revendications précédentes, dans lequel le troisième dispositif d'enregistrement optique présente le premier dispositif d'enregistrement optique, un autre dispositif d'enregistrement optique et une unité de traitement de données 3D, dans lequel l'autre dispositif d'enregistrement optique est installé de manière identique avec le premier dispositif d'enregistrement optique et dans une position prédéterminée par rapport à celui-ci, dans lequel l'unité de traitement de données 3D est conçue pour générer des données d'image 3D sur la base d'images 2D, qui ont été enregistrées par le premier dispositif d'enregistrement optique et l'autre dispositif d'enregistrement optique.

10. Système selon l'une quelconque des revendications précédentes, dans lequel l'unité de traitement de données est installée dans une centrale, le système présentant en outre une unité de communication de données, qui est conçue pour transmettre des données, en particulier l'image en couleur 2D, la multitude d'images spectrales 2D et l'image 3D des premier, deuxième et troisième dispositifs d'enregistrement à l'unité de traitement de données.

11. Système selon l'une quelconque des revendications précédentes, présentant en outre,
un dispositif de projection pour fournir une projection de lumière, en particulier une projection laser, et
un dispositif d'étalonnage pour mettre en œuvre un étalonnage d'axe au moyen de la projection de lumière.

12. Véhicule pour l'évacuation d'ordures, le véhicule présentant un système selon l'une quelconque des revendications précédentes,
dans lequel le véhicule est un véhicule à ordures compressées avec un déversement, et
dans lequel le système est monté à proximité du déversement.

13. Véhicule selon la revendication 12,
dans lequel le système est couplé au moins en partie à l'alimentation en tension du véhicule à ordures par l'intermédiaire d'un lissage de pic et/ou d'une alimentation en sous-tension.

14. Procédé pour détecter les composants dans une quantité d'objets, constituée de déchets, d'ordures et/ou de matières recyclables, qui est répartie sur une surface dans un véhicule à ordures compressés, le procédé présentant :
l'éclairage de la quantité d'objets ;
l'enregistrement d'une image en couleur 2D de la quantité d'objets ;
l'enregistrement d'une multitude d'images spectrales 2D de la quantité d'objets, dans lequel chaque image spectrale 2D correspond à une longueur d'onde respective prédéterminée ;
l'enregistrement d'une image 3D de la quantité d'objets ; et
la détection des composants dans la quantité d'objets sur la base de l'image en couleur 2D, de la multitude d'images spectrales 2D et de l'image 3D et en utilisant un réseau neuronal, dans lequel les composants de la quantité présente d'objets sont détectés sur les images enregistrées à l'aide du réseau neuronal.
